# EUROPÄISCHE PATENTSCHRIFT

(11) **EP 2 910 498 B1**
(45) Veröffentlichungstag und Bekanntmachung des Hinweises auf die Patenterteilung: **08.06.2016**
(21) Anmeldenummer: 15153760.2
(22) Anmeldetag: 04.02.2015
(51) Int. Cl.: B65G 19/02, B65G 47/61

(54) **Schaltbare Weiche zum Beeinflussen eines Flusses von Einzelwaren in einem Fördersystem, Fördersystem mit einer derartigen schaltbaren Weiche sowie Verfahren zum Schalten einer derartigen schaltbaren Weiche**
Switchable points for influencing a flow of individual goods in a conveyor system, conveyor system with such switchable points and method for switching such switchable points
Aiguillage commutable destiné à influencer l'écoulement de marchandises individuelles dans un système de transport, système de transport doté d'un tel aiguillage commutable et procédé de commutation d'un tel aiguillage commutable

(30) Priorität: 20.02.2014 DE 102014203118
(43) Veröffentlichungstag der Anmeldung: 26.08.2015
(73) Patentinhaber: Dürkopp Fördertechnik GmbH, 33719 Bielefeld (DE)
(72) Erfinder: Sieksmeier, Dirk, 32139 Spenge (DE); Wend, Michael, 33619 Bielefeld (DE)
(74) Vertreter: Rau, Schneck & Hübner Patentanwälte Rechtsanwälte PartGmbB

(56) Entgegenhaltungen:
- DE-U1- 9 408 513
- US-A1- 2005 121 292
- US-A1- 2011 233 027

## Beschreibung

Die Erfindung betrifft eine schaltbare Weiche zum Beeinflussen eines Flusses von Einzelwaren in einem Fördersystem, ein Fördersystem mit einer derartigen schaltbaren Weiche sowie ein Verfahren zum Schalten einer derartigen schaltbaren Weiche.

Die DE 94 08 513 U1 offenbart eine Schaltbare Weiche nach dem Oberbegriff des Anspruchs 1, ein Fördersystem mit einer solchen Weiche, ein Verfahren zum Schalten einer schaltbaren Weiche nach dem Oberbegriff des Anspruchs 9 sowie eine Hängeförderanlage mit Weichenzungen. Die US 2011/0233027 A1 offenbart eine Vorrichtung zum Ablauf von Tabletten aus einer Tablettenpresse. Die US 2005/0121292 A1 offenbart eine Hängefördereinrichtung mit Führungsschienen für Haken von Kleiderbügeln.

Aus der DE 202 14 780 U1 ist eine Weiche für eine Hängebahn zur Aufnahme von hängendem Fördergut bekannt. Das Umschalten der Weiche erfolgt durch ein manuelles Drehen einer Weichenzunge. Aufgrund der Notwendigkeit des manuellen Eingreifens für einen Schaltvorgang ist die Förderleistung eines Fördersystems mit einer derartigen Weiche reduziert.

Es sind darüber hinaus aromatisiert schaltbare Weichen bekannt. Um einen störungsfreien Fluss der Einzelwaren zu gewährleisten, ist bei einem Fördersystem mit einer derartigen Weiche ein großer Abstand zwischen zwei benachbarten Einzelwaren entlang der Förderrichtung erforderlich. Aufgrund dieses großen Abstands ist die Förderleistung eines derartigen Fördersystems reduziert.

Es ist eine Aufgabe der vorliegenden Erfindung, eine Weiche bereitzustellen, die eine höhere Förderrate von Einzelwaren ermöglicht.

Diese Aufgabe ist durch eine schaltbare Weiche mit den Merkmalen des Anspruchs 1 gelöst. Erfindungsgemäß wurde erkannt, dass die schaltbare Weiche zum Beeinflussen eines Flusses von Einzelwaren in einem Fördersystem eine Erhöhung der Förderleistung dadurch ermöglicht, dass ein Abstand entlang einer Förderrichtung zwischen zwei benachbarten Einzelwaren reduziert werden kann, wobei ein störungsfreies Fördern der Einzelwaren gewährleistet ist. Dies wird dadurch erreicht, dass eine Stellkraft für ein Verlagern einer Weichenzunge zwischen einer ersten Schaltstellung und einer davon abweichenden zweiten Schaltstellung derart gewählt ist, dass die Weichenzunge den Fluss der Einzelwaren nicht beeinträchtigt. Insbesondere ist ausgeschlossen, dass ein Kontakt zwischen der geschalteten Weichenzunge und einer im Bereich der Weichenzunge geförderten Einzelware dazu führt, dass die Förderung der Einzelware entlang der Förderrichtung unterbrochen oder beendet wird. Die Richtung der Stellkraft, mit der die Weichenzunge beaufschlagt wird, ist quer zur Förderrichtung der Einzelwaren orientiert. Die Förderrichtung der von der Weichenzunge mit der Stellkraft beaufschlagten Einzelware bleibt im Wesentlichen unverändert. Das bedeutet, dass ein Umschalten der Weichenzunge für eine Einzelware insbesondere auch dann erfolgen kann, wenn eine entlang der Förderrichtung stromaufwärts angeordnete Vorgänger-Einzelware im Bereich der Weichenzunge angeordnet ist. Es ist also insbesondere nicht erforderlich, dass ein Abstand zwischen zwei benachbarten Einzelwaren entlang der Förderrichtung derart groß gewählt ist, dass eine Einzelware erst dann in den Bereich der Weichenzunge gefördert werden darf, wenn die stromaufwärts angeordnete Vorgänger-Einzelware den Bereich der Weichenzunge bereits verlassen hat. Das bedeutet, dass es nicht erforderlich ist, dass der Abstand zwischen zwei benachbarten Einzelwaren mindestens der Länge des Förderwegs von einer Einschleusebahn zu einer ersten Ausschleusebahn oder zu einer zweiten Ausschleusebahn entsprechen muss. Der erforderliche Mindestabstand zwischen zwei benachbarten Einzelwaren entlang der Förderrichtung kann mit der erfindungsgemäßen schaltbaren Weiche reduziert werden. Bei einem Schalten der erfindungsgemäßen Weiche wird also bewusst akzeptiert, dass die Weichenzunge die noch im Bereich der Weichenzunge geförderte Vorgänger-Einzelware kontaktiert. Die Weichenzunge, insbesondere während eines Wechsels von der ersten in die zweite Schaltstellung, liegt an der Vorgänger-Einzelware an. Die Schaltverlagerung der Weichenzunge wird durch das Anliegen der Weichenzunge an der Vorgänger-Einzelware zunächst, insbesondere kurzzeitig, gestoppt. Die Warenzunge folgt der Bewegung der Einzelware nach, bis die Warenzunge in einer vorgegebenen End-Schaltstellung ist.

Vorteilhaft ist eine schaltbare Weiche, bei der die Stellkraft derart festgelegt ist, dass ein von der Weichenzunge auf die Einzelware wirkender effektiver Stellkraftanteil kleiner oder gleich ist wie eine Führungs-/Antriebskraft, mit der die Einzelware entlang einer ersten Ausschleuserichtung oder entlang einer zweiten Ausschleuserichtung gefördert wird. Die Führungs-/Antriebskraft dient zum Führen und/oder zum Antreiben der Einzelware. Die Führungs-/Antriebskraft kann sich beispielsweise aus einer Reibkraft ergeben, mit der Liegeware, insbesondere Stückgut wie Päckchen oder Pakete, auf einem Förderband angeordnet sind. Die Führungs-/Antriebskraft kann auch durch einen beispielsweise einen Kleiderbügel mit einem Kleidungsstück aufnehmenden Adapter vorgegeben sein, der entlang eines Schienensystems gefördert wird.

Vorteilhaft ist eine schaltbare Weiche, bei der ein zwischen zwei benachbarten Einzelwaren erforderlicher Mindestförderabstand kleiner ist als ein Weichenförderweg. Der Weichenförderweg ergibt sich als ein Abstand zwischen dem Eintritt in den Weichenzungenbereich, also zwischen dem Eintritt in den Weichenzungenbereich und dem Austritt aus dem Weichenzungenbereich.

Vorteilhaft ist eine schaltbare Weiche, bei der die Weichenzunge ein um eine Schwenkachse schwenkbarer Schwenkhebel ist. Insbesondere ist die Schwenkachse vertikal orientiert. Eine derartige Weichenzunge ist konstruktiv unkompliziert und robust ausgeführt. Eine derartige Weichenzunge eignet sich insbesondere für das Beeinflussen des Flusses von Waren, die als Stückgut auf einem Förderband gefördert werden.

Es ist eine weitere Aufgabe der vorliegenden Erfindung, ein Fördersystem zum Fördern von Einzelwaren derart zu verbessern, dass die Förderrate erhöht ist.

Diese Aufgabe ist durch ein Fördersystem mit den Merkmalen nach Anspruch 5 gelöst. Das Fördersystem weist eine erfindungsgemäße schaltbare Weiche auf. Die Vorteile des erfindungsgemäßen Fördersystems entsprechen den Vorteilen der schaltbaren Weiche, worauf hiermit verwiesen wird.

Vorteilhaft ist ein Fördersystem, bei dem ein Stellelement zum Stellen der Weichenzunge mit einer Steuerungseinheit in Signalverbindung steht. Die Steuerungseinheit dient zum Steuern eines Schaltvorgangs, also zum, insbesondere automatischen, Steuern eines Wechsels der Weichenzungenschaltstellung.

Vorteilhaft ist ein Fördersystem mit mindestens einer Identifikationseinheit zum Identifizieren der Einzelwaren. Die Identifikationseinheit ist eine Leseeinheit, die einen Identifikationscode der Einzelware erfassen kann. Der Identifikationscode kann beispielsweise ein Barcode, insbesondere ein Strichcode sein. Zur Identifikation der Einzelwaren kann auch ein zweidimensionaler Barcode, ein sogenannter QR-Code, verwendet werden. Sofern es sich bei den Einzelwaren um Liegeware handelt, kann der Identifikationscode auf der Ware direkt angebracht sein. Sofern es sich bei der Einzelware um Hängeware handelt, kann der Identifikationscode an einem Adapter angeordnet sein, der einen Kleiderbügel mit der Einzelware aufnimmt. Insbesondere kann an dem Adapter und/oder der Liegeware direkt ein Transponder vorgesehen sein. Je nach Wahl des Identifikationscodes wird die Identifikationseinheit ausgewählt, also beispielsweise als Barcodeleser oder als Transponderleser.

Besonders vorteilhaft ist ein Fördersystem, bei dem die Identifikationseinheit mit der Steuereinheit zum Übertragen eines Identifikationssignals in Signalverbindung steht. Das Identifikationssignal dient zum Auslösen des gesteuerten Wechselns der Weichenzungenschaltstellung. Dazu kann in der Steuerungseinheit eine Liste mit Förderrouten entlang des Fördersystems hinterlegt sein, wobei für jede Einzelware unterschiedliche Förderrouten festgelegt sind. In Abhängigkeit des jeweils erfassten Identifikationscodes kann eine Weichenzungenschaltstellung geschalten werden. Zusätzlich oder alternativ ist es auch denkbar, dass beispielsweise stückzahlabhängig eine Weichenzungenschaltung erfolgt. Beispielsweise können bei identischen Einzelwaren, die zu einer vordefinierten Losgröße von beispielsweise 50 Stück gesammelt werden sollen, anhand der Identifikationseinheit die Anzahl der geförderten Einzelwaren erfasst werden. Die Identifikationseinheit dient in diesem Fall zusätzlich als Zähleinheit. Sobald die erforderliche Anzahl von Einzelwaren entlang einer ersten Förderroute erreicht ist, bewirkt ein gesteuerter Wechsel der Weichenzungenschaltstellung, dass die nachfolgenden Einzelwaren über die zweite Förderroute zusammengestellt werden.

Es ist eine weitere Aufgabe der vorliegenden Erfindung, ein Verfahren zum Schalten einer schaltbaren Weiche derart zu verbessern, dass die Förderrate eines Fördersystems erhöht ist.

Diese Aufgabe ist durch ein Verfahren mit den Merkmalen nach Anspruch 9 gelöst. Wesentlich ist, dass ein Beaufschlagen einer schaltbar verlagerbaren Weichenzunge mit einer Stellkraft ein Verlagern der Weichenzunge zwischen zwei Schaltstellungen ermöglicht. Der Wechsel zwischen den Weichenzungenschaltstellungen erfolgt derart, dass die mit der Stellkraft beaufschlagte Weichenzunge ein störungsfreies Fördern der Einzelwaren gewährleistet. Das bedeutet, dass ein Wechsel der Weichenzungenschaltstellungen bereits zu einem Zeitpunkt erfolgen kann, zu dem eine Vorgänger-Einzelware im Bereich der Weichenzunge angeordnet ist, da das Schalten der Weichenzunge die Förderung dieser Vorgänger-Einzelware nicht beeinträchtigt. Das bedeutet, dass ein Abstand zwischen zwei entlang einer Förderrichtung geförderten Einzelwaren reduziert werden kann. Mittels des erfindungsgemäßen Verfahrens ist die Förderrate der Einzelwaren in dem Fördersystem erhöht.

Vorteilhaft ist ein Verfahren, bei dem ein Fördern der Einzelwaren derart erfolgt, dass ein zwischen zwei benachbarten Einzelwaren erforderlicher Mindestförderabstand kleiner ist als ein Weichenförderweg. Dadurch ist die Förderrate zusätzlich erhöht.

Vorteilhaft ist ein Verfahren, bei dem die Einzelwaren entlang der Förderrichtung aktiv angetrieben werden. Dazu ist ein Förderantrieb erforderlich. Ein Förderantrieb kann beispielsweise in Form eines angetriebenen Förderbandes für Liegeware oder als angetriebenes Fördersystem für Adapter, die Hängeware mittels eines Kleiderbügels aufnehmen, ausgeführt sein. Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: eine schematische Darstellung eines erfindungsgemäßen Fördersystems mit einer schaltbaren Weiche,
- Fig. 2: eine schematische Draufsicht einer schaltbaren Weiche gemäß Fig. 1 mit einer Weichenzunge in einer ersten Schaltstellung, und
- Fig. 3 bis 8: Fig. 2 entsprechende Draufsichten mit verschiedenen Schaltstellungen der Weichenzunge.

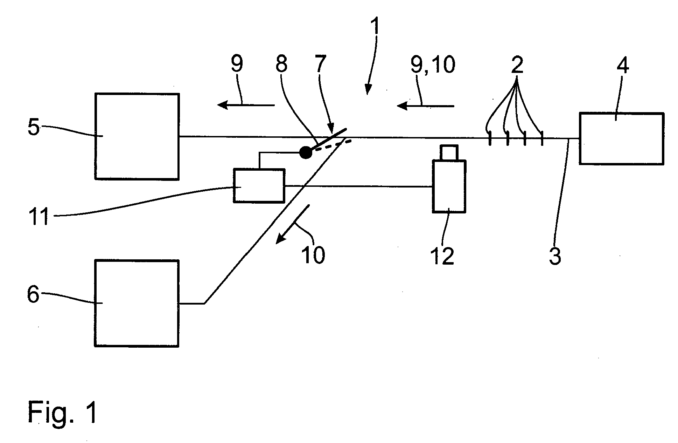

Ein in Fig. 1 stark schematisch dargestelltes Fördersystem 1 dient zum Fördern von Einzelwaren 2. Die Einzelwaren 2 werden auf einer vorgegebenen Förderbahn 3 gefördert. In Abhängigkeit der zu fördernden Einzelwaren 2 kann die Förderbahn 3 unterschiedlich ausgeführt sein. Beispielsweise dienen angetriebene Förderbänder zum Transport von Liegewaren. Angetriebene Transportschienen-Systeme dienen zum Fördern von Adaptern, die zur Aufnahme von Hängeware, insbesondere von Kleiderbügeln mit Kleidungsstücken, dienen.

Die Einzelwaren 2 werden entlang der Förderbahn 3 von einer Einzelwaren-Quelle, die gemäß dem gezeigten Ausführungsbeispiel als Warenlager 4 ausgeführt ist, zu mindestens zwei verschiedenen Warenzielen gefördert. Bei dem gezeigten Ausführungsbeispiel ist ein erstes Warenziel ein erster Kommissionier-Arbeitsplatz 5 und ein zweites Warenziel ein zweiter Kommissionier-Arbeitsplatz 6. Die Kommissionierarbeitsplätze 5, 6 dienen zum Kommissionieren mehrerer Artikel zu einem Auftrag, der insbesondere mehrere Artikel umfasst. Von den Kommissionierarbeitsplätzen 5, 6 können die kommissionierten Artikel beispielsweise an einen Warenausgang abgegeben werden. Es ist auch möglich, dass die Einzelwaren 2 von dem Warenlager 4 über die Förderbahn 3 direkt zu dem Warenausgang gefördert werden. In diesem Fall entfallen die Kommissionierarbeitsplätze 5, 6. Das bedeutet, dass als Warenziel direkt der Warenausgang dient. Es können auch mehrere Warenausgänge vorgesehen sein.

Um den Fluss der Einzelwaren 2 entlang der Förderbahn 3 zu beeinflussen, ist eine schaltbare Weiche 7 vorgesehen. Die Weiche 7 ist im Wesentlichen Y-förmig ausgeführt und dient als Verteiler der Einzelwaren 2 von dem Warenlager 4 zu dem ersten oder zweiten Warenziel 5, 6. Dazu weist die Weiche 7 eine in Fig. 1 schematisch dargestellte Weichenzunge 8 auf, die zwischen einer ersten Schaltstellung, die in Fig. 1 in gestrichelter Linie dargestellt ist, und einer zweiten Schaltstellung, die in Fig. 1 in durchgezogener Linie dargestellt ist, schaltbar verlagerbar ist. In der ersten Schaltstellung ermöglicht die Weiche 7 eine Förderung der Einzelwaren 2 von dem Warenlager 4 zu dem ersten Warenziel 5. Die Einzelwaren 2 werden entlang einer ersten Ausschleuserichtung aus der Weiche 7 ausgeschleust. Die erste Ausschleuserichtung entspricht einer ersten Förderrichtung 9. Entsprechend werden die Einzelwaren 2 in der zweiten Schaltstellung der Weichenzunge 8 entlang einer zweiten Ausschleuserichtung aus der Weiche 7 ausgeschleust. Die zweite Ausschleuserichtung entspricht einer zweiten Förderrichtung 10. Die erste Förderrichtung 9 und die zweite Förderrichtung 10 sind in dem Bereich der Förderbahn 3 zwischen dem Warenlager 4 und der Weiche 7 identisch. Ab der Weiche 7 trennen sich die Förderrichtungen 9, 10 voneinander, um der jeweiligen Ausschleuserichtung zu folgen.

Um die Weichenzunge 8 der Weiche 7 zu schalten, ist die Weichenzunge 8 mit einer Steuerungseinheit 11 in Signalverbindung. Die Steuerungseinheit 11 ist mit einer Identifikationseinheit 12 in Signalverbindung. Die Identifikationseinheit 12 dient zum Identifizieren der Einzelwaren 2.

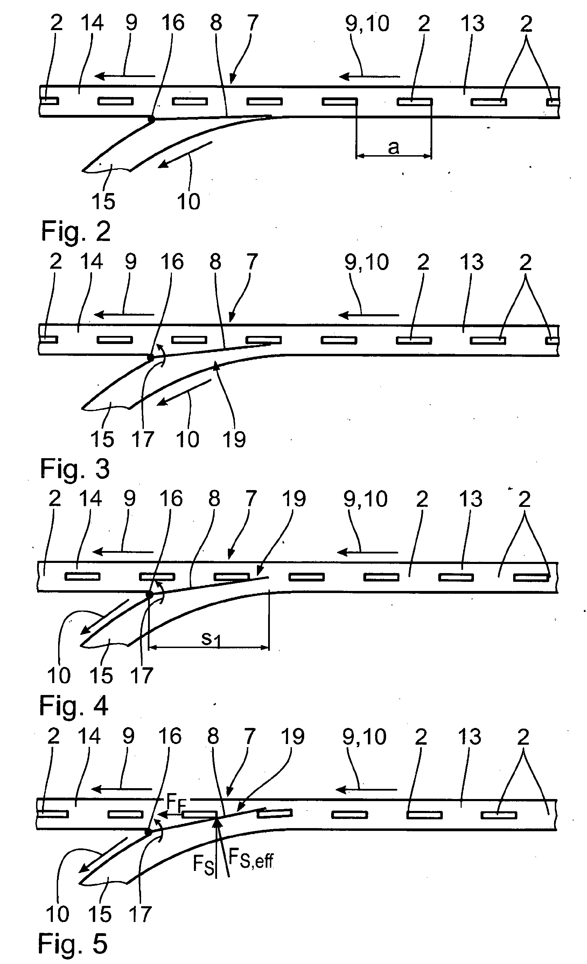

Im Folgenden werden anhand der Fig. 2 bis Fig. 8 der Aufbau und die Funktionsweise der schaltbaren Weiche 7 näher erläutert. Fig. 2 zeigt einen vergrößerten Detailausschnitt der Weiche 7.

Die schaltbare Weiche 7 umfasst eine Einschleusebahn 13, die dem Warenlager 4 zugewandt ist. Insbesondere kann die Einschleusebahn 13 Teil der Förderbahn 3 sein. Entlang der Einschleusebahn 13 werden die Einzelwaren 2 entlang der Förderrichtung 9, 10 zu der Weiche 7 hin gefördert. Die Weiche 7 umfasst weiterhin eine erste Ausschleusebahn 14 zum Ausschleusen der Einzelwaren 2 entlang der ersten Ausschleuserichtung 9. Die Weiche 7 umfasst ferner eine zweite Ausschleusebahn 15 zum Ausschleusen der Einzelwaren 2 entlang der zweiten Ausschleuserichtung 10. Im Bereich zwischen der Weiche 7 und den Warenzielen 5, 6 sind die Ausschleuserichtungen 9, 10 und damit die Förderrichtungen 9, 10 voneinander verschieden.

Die Förderbahn 3 wird in dem Bereich zwischen dem Warenlager 4 und der Weiche 7 als Zuführbahn bezeichnet. Die Zuführbahn dient zum Zuführen der Einzelwaren 2 zu der Einschleusebahn 13. Entsprechend schließen sich an die erste Ausschleusebahn 14 eine erste Ausführbahn zum Abführen der Einzelwaren 2 entlang der ersten Förderrichtung 9 und im Anschluss an die zweite Ausschleusebahn 14 eine zweite Abführbahn zum Abführen der Einzelwaren 2 entlang der zweiten Förderrichtung 10 an.

Die in Fig. 2 rein schematisch dargestellte Weichenzunge 8 befindet sich in einer ersten Schaltstellung. In dieser ersten Schaltstellung gibt die Weichenzunge 8 die erste Förderrichtung 9 von dem Warenlager 4 über die Einschleusebahn 13 zu der ersten Ausschleusebahn 14 und somit zu dem ersten Warenziel 5 frei. Gleichzeitig ist die zweite Ausschleusebahn 15, also die Förderung von dem Warenlager 4 zu dem zweiten Warenziel 6, blockiert. In der ersten Schaltstellung der Weichenzunge 8 erfolgt die Förderung der Einzelwaren 2 von der Einschleusebahn 13 zu der ersten Ausschleusebahn 14. Eine Förderung der Einzelwaren 2 von der Einschleusebahn 13 zu der zweiten Ausschleusebahn 15 ist in der ersten Schaltstellung der Weichenzunge 8 gemäß Fig. 2 verhindert, da die Weichenzunge 8 die zweiten Ausschleusebahn 15 versperrt.

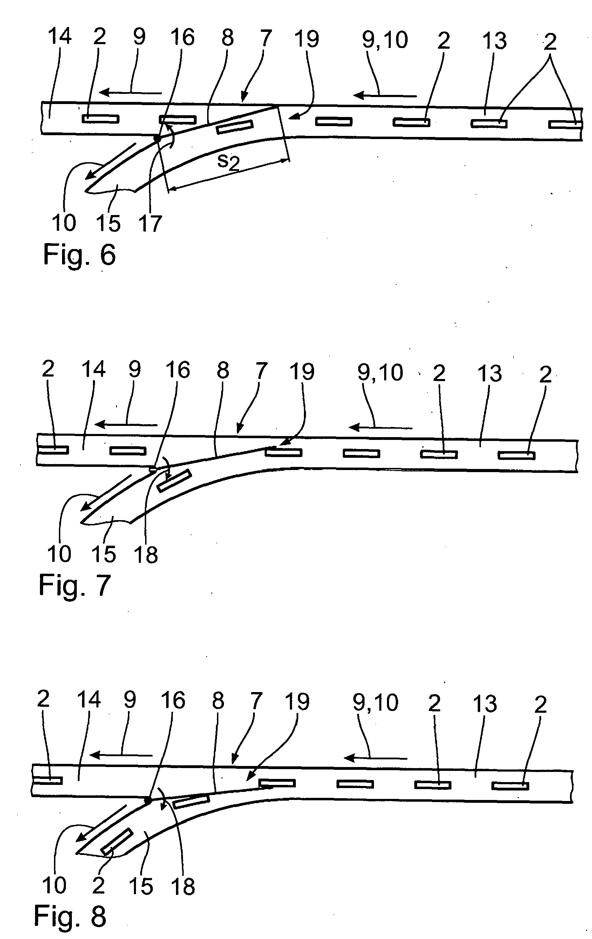

Um die Weichenzunge 8 zwischen den Schaltstellungen zu verlagern, ist ein Stellelement 16 vorgesehen. Gemäß dem gezeigten Ausführungsbeispiel ist das Stellelement 16 als vertikal orientierte Achse ausgeführt, an der die Weichenzunge 8 segelartig, also um die vertikale Achse schwenkbar angebracht ist. Das Stellelement 16 ist über eine Datenverbindung mit der nicht dargestellten Steuerungseinheit in Signalverbindung. Zum Verlagern der Weichenzunge 8 von der in Fig. 2 dargestellten ersten Schaltstellung in die in Fig. 6 gezeigte zweite Schaltstellung wird die Weichenzunge 8 durch das Stellelement 16 mit einer Stellkraft F_{S} beaufschlagt. Gemäß dem gezeigten Ausführungsbeispiel wirkt die Stellkraft F_{S} in diesem Fall im Gegenuhrzeigersinn um die Vertikalachse des Stellelements 16. Die Weichenzunge 8 dreht also im Gegenuhrzeigersinn um das Stellelement 16 nach oben. Die Drehbewegung im Gegenuhrzeigersinn zum Verlagern der Weichenzunge 8 von der ersten Schaltstellung in die zweite Schaltstellung ist in Fig. 3 mit dem Bezugszeichen 17 gekennzeichnet.

Entsprechend erfolgt eine Verlagerung von der in Fig. 6 gezeigten zweiten Schaltstellung der Weichenzunge 8 zurück in die erste Schaltstellung durch eine Rotation der Weichenzunge 8 im Uhrzeigersinn um das Stellelement 16. Das bedeutet, dass die Stellkraft F_{S} zum Verlagern der Weichenzunge 8 von der zweiten Schaltstellung in die erste Schaltstellung der Stellkraft F_{S} zum Verlagern der Weichenzunge 8 von der ersten Schaltstellung in die zweite Schaltstellung entgegengerichtet ist. Diese Drehbewegung ist in Fig. 7 und 8 mit 18 gekennzeichnet.

Im Folgenden wird anhand der Fig. 2 bis 8 die Funktionsweise der schaltbaren Weiche 7 und insbesondere das Verfahren zum Schalten der schaltbaren Weiche 7 näher erläutert. Ausgehend von der in Fig. 2 gezeigten Anordnung des Fördersystems 1 mit der Weichenzunge 8 der Weiche 7 in der ersten Schaltstellung werden die Einzelwaren 2 über die Einschleusebahn 13 in die Weiche 7 eingeschleust.

In Abhängigkeit eines Schaltsignals wird ein Schalten der Weichenzunge 8 initiiert. Durch das Schalten der Weichenzunge 8 wird diese von dem Stellelement 16 mit der Stellkraft F_{S} beaufschlagt. Durch das Beaufschlagen der Weichenzunge 8 mit der Stellkraft F_{S} wird die Weichenzunge 8 entlang der Drehbewegung im Uhrzeigersinn 17 verlagert. Dabei kann die Weichenzunge 8 in Kontakt mit einer Einzelware 2 kommen, die sich gerade in dem Weichenbereich 19 befindet. Der Weichenbereich 19 ist der Bereich, der zwischen der Einschleusebahn 13 und den beiden Ausschleusebahnen 14, 15 angeordnet ist.

Dieser erste Kontakt zwischen der Weichenzunge 8 und der Einzelware 2 ist in Fig. 3 dargestellt. In dieser Konstellation ist ein angetriebenes Weiterdrehen der Weichenzunge 8 im Uhrzeigersinn 17 verhindert. Der Grund hierfür liegt darin, dass die Stellkraft F_{S}, die quer zu den Förderrichtungen 9, 10 gerichtet ist, derart gewählt ist, dass ein störungsfreies Fördern der Einzelwaren 2 gewährleistet ist. Das bedeutet, dass der Betrag der Stellkraft F_{S} derart festgelegt ist, dass ein von der Weichenzunge 8 auf die Einzelware 2 wirkender effektiver Stellkraftanteil F_{S,eff} kleiner oder gleich ist wie eine Führungs-/Antriebskraft F_{F}. Die Führungs-/Antriebskraft F_{F} dient zum Fördern der Einzelware entlang einer der Ausschleuserichtungen bzw. einer der Förderrichtungen 9, 10. Das bedeutet also, dass die Weichenzunge 8 mit der Stellkraft F_{S} gegen die Einzelware 2 gedrückt wird. Die Stellkraft F_{S} ist aber klein genug, dass ein Andrücken der Weichenzunge 8 an die Einzelware 2 nicht dazu führt, dass die Einzelware 2 beispielsweise auf einem Förderbahn verrutscht oder ein Adapter für Hängeartikel an der weiteren Förderung gehindert wird. Mit zunehmender Förderung der Einzelware 2 entlang der ersten Förderrichtung 9 wandert die schwenkbare Weichenzunge 8 im Gegenuhrzeigersinn 17, bis die Weichenzunge 8 schließlich die in Fig. 6 skizzierte zweite Schaltstellung erreicht hat. In dieser zweiten Schaltstellung ist die erste Förderrichtung 9 durch die Weichenzunge 8 versperrt. Die Einzelwaren 2 werden über die Einschleusebahn 13 an der Weiche 7 entlang der Weichenzunge 8 zu der zweiten Ausschleusebahn 15 gefördert.

Sofern die Weichenzunge 8 wieder zurück in die erste Schaltstellung verlagert werden soll, erfolgt dies aufgrund eines Schaltsignals von der Steuerungseinheit 11. Die Weichenzunge 8 wird dann im Uhrzeigersinn 18 verlagert, bis die Weichenzunge 8 an der Einzelware 2 anliegt. Auch beim Zurückverlagern von der zweiten Schaltstellung in die erste Schaltstellung folgt die Weichenzunge 8 der Einzelware 2 nach, bis die Weichenzunge 8 die vorgegebene, in diesem Fall die erste Schaltstellung, erreicht.

Das erfindungsgemäße Fördersystem mit der erfindungsgemäßen Weiche ermöglicht also ein Schalten der Weichenzunge 8 von einer ersten Schaltstellung in eine zweite Schaltstellung und umgekehrt, während Einzelwaren 2 während einer Warenförderung im Bereich der Weiche 7 und insbesondere im Bereich der Weichenzunge 8 angeordnet sind. Ein Kontakt zwischen der Weichenzunge 8 und einer auf der Förderbahn 3 angeordneten Einzelware 2 führt nicht zu einer Unterbrechung der Einzelwarenförderung. Insbesondere erfolgt die Verlagerung der Weichenzunge 8 kraftgesteuert.

Die erfindungsgemäße Weiche ermöglicht also, dass ein zwischen zwei benachbarten Einzelwaren 2 vorgesehener Abstand a reduziert ist. Dadurch ist die Dichte der Einzelwaren 2 in dem Fördersystem 1 erhöht. Damit ist die Förderrate erhöht. Insbesondere ist ein erforderlicher Mindestförderabstand aₘᵢₙ zwischen zwei benachbarten Einzelwaren kleiner als ein Weichenförderweg s. Der Weichenförderweg s entspricht der Wegstrecke entlang der jeweiligen Ausschleuserichtung. Entlang der ersten Ausschleuserichtung ist der Weichenförderweg s₁ in Fig. 4 und entlang der zweiten Ausschleuserichtung s₂ in Fig. 6 dargestellt. Im Wesentlichen entspricht der Weichenförderweg s₁, s₂ der Projektion der Weichenzunge 8 auf die jeweilige Ausschleusebahn 14 bzw. 15.

## Patentansprüche

1. Schaltbare Weiche zum Beeinflussen eines Flusses von Einzelwaren (2) in einem Fördersystem (1), wobei die schaltbare Weiche (7) umfasst
a. eine Einschleusebahn (13) zum Einschleusen der Einzelwaren (2),
b. eine erste Ausschleusebahn (14) zum Ausschleusen der Einzelwaren (2) entlang einer ersten Ausschleuserichtung (9),
c. eine zweite Ausschleusebahn (15) zum Ausschleusen der Einzelwaren (2) entlang einer von der ersten Ausschleuserichtung (9) unterschiedlichen zweiten Ausschleuserichtung (10),
d. eine zwischen einer ersten Schaltstellung und einer zweiten Schaltstellung schaltbar verlagerbare Weichenzunge (8),
i. wobei in der ersten Schaltstellung eine Förderung der Einzelwaren (2) von der Einschleusebahn (13) zu der ersten Ausschleusebahn (14) erfolgt und
ii. wobei in der zweiten Schaltstellung eine Förderung der Einzelwaren (2) von der Einschleusebahn (13) zu der zweiten Ausschleusebahn (15) erfolgt,
e. einen Weichenbereich (19), der zwischen der Einschleusebahn (13) und den beiden Ausschleusebahnen (14, 15) angeordnet ist,
**gekennzeichnet durch** eine Steuerungseinheit (11), die mit der Weichenzunge (8) zum Schalten die Weichenzunge (8) in Signalverbindung steht,
**durch** ein Stellelement (16) zum Beaufschlagen der Weichenzunge (8) mit einer Stellkraft (Fₛ) für ein kraftgesteuertes Verlagern der Weichenzunge (8) zwischen der ersten Schaltstellung und der zweiten Schaltstellung,
wobei in Abhängigkeit von einem Schaltsignal ein Schalten der Weichenzunge (8) initiiert wird und die Weichenzunge (8) in Kontakt mit einer Einzelware (2) kommt, die sich gerade in dem Weichenbereich (19) befindet, und wobei in dieser Konstellation ein angetriebenes Weiterverlagen der Weichenzunge (8) verhindert ist.

2. Schaltbare Weiche gemäß Anspruch 1, **dadurch gekennzeichnet, dass** die Stellkraft (F_{S}) derart festgelegt ist, dass ein von der Weichenzunge (8) auf eine Einzelware (2) wirkender effektiver Stellkraftanteil (F_{S,eff}) kleiner oder gleich ist wie eine Führungs-/Antriebskraft (F_{F}), mit der die Einzelware (2) entlang der ersten Ausschleuserichtung (9) oder entlang der zweiten Ausschleuserichtung (10) gefördert wird.

3. Schaltbare Weiche gemäß einem der vorstehenden Ansprüche, **dadurch gekennzeichnet, dass** ein zwischen zwei benachbarten Einzelwaren (2) erforderlicher Mindestförderabstand (aₘᵢₙ) kleiner ist als ein Weichenförderweg (s).

4. Schaltbare Weiche gemäß einem der vorstehenden Ansprüche, **dadurch gekennzeichnet, dass** die Weichenzunge (8) als um eine, insbesondere vertikale, Schwenkachse schwenkbarer Schwenkhebel ausgeführt ist.

5. Fördersystem zum Fördern von Einzelwaren (2) umfassend
a. eine schaltbare Weiche (7) gemäß einem der vorstehenden Ansprüche,
b. eine Zuführbahn zum Zuführen der Einzelwaren (2) zu der Einschleusebahn (13),
c. eine erste Abführbahn zum Abführen der Einzelwaren (2) von der ersten Ausschleusebahn (14),
d. eine zweite Abführbahn zum Abführen der Einzelwaren (2) von der zweiten Ausschleusebahn (15).

6. Fördersystem gemäß Anspruch 5, **gekennzeichnet durch** eine mit dem Stellelement (16) in Signalverbindung stehende Steuerungseinheit (11) zum Steuern eines Wechsels der Weichenzungenschaltstellung.

7. Fördersystem gemäß Anspruch 5 oder 6, **gekennzeichnet durch** mindestens eine Identifikationseinheit (12) zum Identifizieren der Einzelwaren (2).

8. Fördersystem gemäß Ansprüchen 6 und 7, **dadurch gekennzeichnet, dass** die Identifikationseinheit (12) mit der Steuerungseinheit (11) zum Übertragen eines Identifikationssignals derart in Signalverbindung steht, dass das Identifikationssignal das gesteuerte Wechseln der Weichenzungenschaltstellung auslöst.

9. Verfahren zum Schalten einer schaltbaren Weiche (7) zum Beeinflussen eines Flusses von Einzelwaren (2) in einem Fördersystem (1), wobei das Verfahren die Schritte umfasst
- Zuführen der Einzelwaren (2) zu der Weiche (7) mittels einer Zuführbahn,
- Einschleusen der Einzelwaren (2) in die Weiche (7) mittels einer Einschleusebahn (13),
- Schalten der schaltbar verlagerbaren Weichenzunge (8) in eine erste Schaltstellung, in der die Einzelwaren (2) entlang einer ersten Ausschleuserichtung (9) zu einer erste Ausschleusebahn (14) gefördert werden, oder in eine zweite Schaltstellung, in der die Einzelwaren (2) entlang einer von der ersten Ausschleuserichtung (9) unterschiedlichen zweiten Ausschleuserichtung (10) zu einer zweiten Ausschleusebahn (15) gefördert werden,
**gekennzeichnet durch** Beaufschlagen der Weichenzunge (8) mit einer Stellkraft (Fₛ) mittels eines Stellelements (16) für ein kraftgesteuertes Verlagern der Weichenzunge (8) zwischen der ersten Schaltstellung und der zweiten Schaltstellung derart, dass eine Förderrichtung der von der Weichenzunge (8) mit der Stellkraft (F_{S}) beaufschlagten Einzelware (2) im Wesentlichen unverändert bleibt.

10. Verfahren gemäß Anspruch 9, **gekennzeichnet durch** ein Fördern der Einzelwaren (2) derart, dass ein zwischen zwei benachbarten Einzelwaren (2) erforderlicher Mindestförderabstand (aₘᵢₙ) kleiner ist als ein Weichenförderweg (s).

11. Verfahren gemäß Anspruch 9 oder 10, **gekennzeichnet durch** ein aktives Fördern der Einzelwaren (2) entlang einer der Förderrichtungen (9, 10), insbesondere **durch** ein angetriebenes Fördern mittels eines Förderantriebs.

## Claims

1. Actuable switch for influencing a flow of pieces of goods (2) in a conveyor system (1), the actuable switch (7) comprising
a. a feed track (13) for feeding the pieces of goods (2);
b. a first discharge track (14) for discharging the pieces of goods (2) along a first discharge direction (9);
c. a second discharge track (15) for discharging the pieces of goods (2) along a second discharge direction (10) different from the first discharge direction (9);
d. a switch blade (8) which is actuable for displacement between a first operating position and a second operating position, wherein
i. in the first operating position, the pieces of goods (2) are conveyed from the feed track (13) to the first discharge track (14); and
ii. in the second operating position, the pieces of goods (2) are conveyed from the feed track (13) to the second discharge track (15);
e. a switch region (19) which is arranged between the feed track (13) and the two discharge tracks (14, 15),
**characterized by** a control unit (11) which, in order to actuate the switch blade (8), is in signal communication with the switch blade (8), an actuating member (16) for applying an actuating force (Fₛ) to the switch blade (8) for a force-controlled displacement of the switch blade between the first operating position and the second operating position, wherein, in order to actuate the switch blade (8), an actuating signal is released, and the switch blade (8) comes into contact with a piece of goods (2) disposed in the switch region (19) at this particular time, and wherein in this configuration a continuing displacement of the switch blade (8) is prevented.

2. Actuable switch according to claim 1, **characterized in that** the actuating force (F_{S}) is selected such that an effective actuating force component (F_{S,eff}) applied to a piece of goods (2) by the switch blade (8) is smaller than or equal to a guide/drive force (F_{F}) required to convey the piece of goods (2) along the first discharge direction (9) or along the second discharge direction (10).

3. Actuable switch according to one of the preceding claims, **characterized in that** a minimum delivery distance (aₘᵢₙ) required between two adjacent pieces of goods (2) is smaller than a switch delivery path (s).

4. Actuable switch according to one of the preceding claims, **characterized in that** the switch blade (8) is configured as a pivot lever pivotable about an in particular vertical pivot axis.

5. Conveyor system for conveying pieces of goods (2), comprising
a. an actuable switch (7) according to one of the preceding claims;
b. a supply track for supplying the pieces of goods (2) to the feed track (13);
c. a first outlet track for moving the pieces of goods (2) away from the first discharge track (14);
d. a second outlet track for moving the pieces of goods (2) away from the second discharge track (15).

6. Conveyor system according to claim 5, **characterized by** a control unit (11) which is in signal communication with the actuating member (16) to actuate a displacement of the switch blade position.

7. Conveyor system according to claim 5 or 6, **characterized by** at least one identification unit (12) for identifying the pieces of goods (2).

8. Conveyor system according to claims 6 and 7, **characterized in that** in order to transmit an identification signal, the identification unit (12) is in signal communication with the control unit (11) such that the identification signal triggers the controlled displacement of the switch blade position.

9. Method for operating an actuable switch (7) for influencing a flow of pieces of goods (2) in a conveyor system (1), the method comprising the steps of
- supplying the pieces of goods (2) to the switch (7) via a supply track;
- feeding the pieces of goods (2) into the switch (7) via a feed track (13);
- operating the switch blade (8), which is actuable for displacement, so as to move to a first operating position in which the pieces of goods (2) are conveyed to a first discharge track (14) in a first discharge direction (9), or to a second operating position in which the pieces of goods (2) are conveyed to a second discharge track (15) in a second discharge direction (10) different from the first discharge direction (9);
**characterized by** applying an actuating force (Fₛ) to the switch blade (8) by means of an actuating member (16) for a force-controlled displacement of the switch blade (8) between the first operating position and the second operating position such, that a direction of conveyance of the piece of goods (2), to which the actuating force (Fₛ) is applied by means of the switch blade (8), remains substantially unchanged.

10. Method according to claim 9, **characterized by** a delivery of the pieces of goods (2) such that a minimum delivery distance (aₘᵢₙ) between two adjacent pieces of goods (2) is smaller than a switch delivery path (s).

11. Method according to claim 9 or 10, **characterized by** an active delivery of the pieces of goods (2) along one of the directions of conveyance (9, 10), in particular by a driven delivery by means of a conveyor drive.

## Revendications

1. Aiguillage commutable destiné à influencer un flux de marchandises individuelles (2) dans un système de transport (1), l'aiguillage commutable (7) comprenant
a. une bande de chargement (13) permettant le chargement des marchandises individuelles (2),
b. une première bande de déchargement (14) permettant le déchargement des marchandises individuelles (2) le long d'une première direction de déchargement (9),
c. une deuxième bande de déchargement (15) permettant le déchargement des marchandises individuelles (2) le long d'une deuxième direction de déchargement (10) différente de la première direction de déchargement (9),
d. une lame d'aiguillage (8) pouvant être déplacée de manière commutable entre une première position de commutation et une deuxième position de commutation,
i. dans la première position de commutation, les marchandises individuelles (2) étant transportées de la bande de chargement (13) à la première bande de déchargement (14) et
ii. dans la deuxième position de commutation, les marchandises individuelles (2) étant transportées de la bande de chargement (13) à la deuxième bande de déchargement (15),
e. une zone d'aiguillage (19), qui est agencée entre la bande de chargement (13) et les deux bandes de déchargement (14, 15),
**caractérisé par** une unité de commande (11), qui est reliée par des signaux à la lame d'aiguillage (8) pour commuter la lame d'aiguillage (8),
par un élément d'actionnement (16) destiné à soumettre la lame d'aiguillage (8) à une force d'actionnement (F_{S}) qui sert au déplacement commandé par une force de la lame d'aiguillage (8) entre la première position de commutation et la deuxième position de commutation,
une commutation de la lame d'aiguillage (8) étant initiée en fonction d'un signal de commutation et la lame d'aiguillage (8) venant en contact avec une marchandise individuelle (2) qui se situe précisément dans la zone d'aiguillage (19), et un déplacement supplémentaire entraîné de la lame d'aiguillage (8) dans cette constellation étant empêché.

2. Aiguillage commutable selon la revendication 1, **caractérisé en ce que** la force d'actionnement (F_{S}) est définie de telle manière qu'une fraction effective de force d'actionnement (F_{S,eff}) agissant de la lame d'aiguillage (8) sur une marchandise individuelle (2) est inférieure ou égale à une force de guidage/d'entraînement (F_{F}) avec laquelle la marchandise individuelle (2) est transportée le long de la première direction de déchargement (9) ou le long de la deuxième direction de déchargement (10).

3. Aiguillage commutable selon l'une quelconque des revendications précédentes, **caractérisé en ce qu'**un écart minimal de transport (aₘᵢₙ) nécessaire entre deux marchandises individuelles (2) adjacentes est inférieur à un trajet de transport d'aiguillage (s).

4. Aiguillage commutable selon l'une quelconque des revendications précédentes, **caractérisé en ce que** la lame d'aiguillage (8) est réalisée sous la forme d'un levier pivotant pouvant pivoter autour d'un axe de pivotement, en particulier vertical.

5. Système de transport permettant de transporter des marchandises individuelles (2), comprenant :
a. un aiguillage commutable (7) selon l'une quelconque des revendications précédentes,
b. une bande d'amenée destinée à amener les marchandises individuelles (2) à la bande de chargement (13),
c. une première bande d'évacuation destinée à évacuer les marchandises individuelles (2) de la première bande de déchargement (14),
d. une deuxième bande d'évacuation destinée à évacuer les marchandises individuelles (2) de la deuxième bande de déchargement (15).

6. Système de transport selon la revendication 5, **caractérisé par** une unité de commande (11) reliée par des signaux à l'élément d'actionnement (16) et destinée à commander un changement de la position de commutation de la lame d'aiguillage.

7. Système de transport selon la revendication 5 ou 6, **caractérisé par** au moins une unité d'identification (12) destinée à identifier les marchandises individuelles (2).

8. Système de transport selon les revendications 6 et 7, **caractérisé en ce que** l'unité d'identification (12) est reliée par des signaux à l'unité de commande (11) pour transmettre un signal d'identification, de telle manière que le signal d'identification déclenche le changement commandé de la position de commutation de la lame d'aiguillage.

9. Procédé de commutation d'un aiguillage commutable (7) destiné à influencer un flux de marchandises individuelles (2) dans un système de transport (1), le procédé comprenant les étapes consistant à :
- amener les marchandises individuelles (2) à l'aiguillage (7) au moyen d'une bande d'amenée,
- charger les marchandises individuelles (2) dans l'aiguillage (7) au moyen d'une bande de chargement (13),
- faire basculer la lame d'aiguillage (8) pouvant être déplacée de manière commutable dans une première position de commutation, dans laquelle les marchandises individuelles (2) sont transportées le long d'une première direction de déchargement (9) en direction d'une première bande de déchargement (14), ou dans une deuxième position de commutation, dans laquelle les marchandises individuelles (2) sont transportées le long d'une deuxième direction de déchargement (10) différente de la première direction de déchargement (9) en direction d'une deuxième bande de déchargement (15), **caractérisé par** la soumission de la lame d'aiguillage (8)
à une force d'actionnement (F_{S}) au moyen d'un élément d'actionnement (16) qui sert au déplacement commandé par une force de la lame d'aiguillage (8) entre la première position de commutation et la deuxième position de commutation, de telle manière qu'une direction de transport de la marchandise individuelle (2) soumise par la lame d'aiguillage (8) à la force d'actionnement (F_{S}) reste sensiblement inchangée.

10. Procédé selon la revendication 9, **caractérisé par** un transport des marchandises individuelles (2) de telle manière qu'un écart minimal de transport (aₘᵢₙ) nécessaire entre deux marchandises individuelles (2) adjacentes est inférieur à un trajet de transport d'aiguillage (s).

11. Procédé selon la revendication 9 ou 10, **caractérisé par** un transport actif des marchandises individuelles (2) le long d'une des directions de transport (9, 10), en particulier par un transport entraîné au moyen d'un entraînement de transport.
